# DEMANDE DE BREVET EUROPEEN

(11) **EP 1 098 419 A1**
(43) Date de publication de la demande: **09.05.2001**
(21) Numéro de dépôt: 00490045.2
(22) Date de dépôt: 27.10.2000
(51) Int. Cl.: H02J 7/00

(54) **Dispositif de contrôle de l'état des accumulateurs d'une batterie**

(30) Priorité: 02.11.1999 FR 9913942
(71) Demandeur: Accunord, SARL, 59100 Roubaix (FR)
(72) Inventeur: Saint-Maxent, Stéphane Lucien Paul, 94140 Alfortville (FR)
(74) Mandataire: Ecrepont, Robert

(57) **Abrégé**

L'invention se rapporte à un dispositif de contrôle de l'état des accumulateurs d'une batterie comprenant un moyen (5) pour relever périodiquement la tension aux bornes de chaque accumulateur (2) et un moyen (5A) pour la comparer avec une tension de consigne.

Ce dispositif est caractérisé en ce qu'il comprend :
- un moyen (6) pour connecter électriquement l'accumulateur défaillant à un chargeur (7) d'égalisation comprenant un moyen (7A) pour charger l'accumulateur à courant constant, jusqu'à ce que sa tension soit égale à la tension d'égalisation et lorsque cette tension d'égalisation est atteinte, à tension constante égale à la tension d'égalisation précitée pendant un temps déterminé,
- un moyen (8) pour, juste avant la fin de la charge, relever le courant dit résiduel de charge du chargeur et
- un moyen (9) pour comparer la valeur du courant résiduel de charge avec une valeur de référence dite valeur seuil fonction de la nature de l'accumulateur.

## Description

L'invention se rapporte à un dispositif de contrôle de l'état des accumulateurs d'une batterie.

Pour pallier à un coupure brusque du courant électrique délivré par le réseau traditionnel, il est souvent prévu un système de secours qui se substitue momentanément à cette perte d'alimentation électrique.

Le système de secours peut être constitué de différents matériels qui sont choisis suivant les besoins.

Il peut s'agir d'un ensemble d'accumulateurs électriques ou batterie, d'un groupe électrogène ou encore de la combinaison des deux.

Dans le cas de l'utilisation d'une batterie composée d'accumulateurs montés électriquement en série et/ou en parallèle, l'avantage de ce type de matériel provient de la rapidité de substitution de l'alimentation de secours à l'alimentation secteur.

De manière évidente, les accumulateurs, sans pour autant les utiliser, se déchargent et vieillissent plus ou moins rapidement.

Pour garder la capacité de la batterie de secours, il faut donc au moins périodiquement la recharger et/ou remplacer les accumulateurs déficients.

Au moins pour surveiller l'état d'une batterie, il est connu de faire appel à un dispositif de contrôle de l'état d'une batterie.

On connaît des dispositifs qui, périodiquement, mesurent la tension aux bornes de chaque accumulateur, comparent les tensions relevées avec une tension de consigne et selon cette comparaison, signalent ou non un défaut.

Il s'agit d'un système relativement simple mais qui ne permet pas de déterminer réellement le vieillissement de chaque accumulateur.

On connaît d'autres dispositifs qui consistent à décharger tour à tour chaque accumulateur, puis à les recharger tout en relevant, à des instants prédéterminés, des paramètres tension et courant qui pourront être utilisés ensuite pour déterminer l'état de chaque accumulateur.

Par comparaison dans le temps, c'est à dire avec les paramètres relevés lors des essais précédents, on parvient à déterminer la qualité des accumulateurs.

Pendant l'essai, la capacité de la batterie est malheureusement, réduite temporairement puisque un ou plusieurs accumulateurs sont déchargés ce qui n'est pas acceptable dans le contexte de l'emploi des accumulateurs.

On connaît un système de charge de batteries (DE-38 34 003) pour des batteries de traction.

Ces batteries doivent être régulièrement chargées et pour cette charge, on déconnecte la batterie et on charge à courant constant jusqu'à ce que la batterie atteigne un seuil puis on charge à tension constante :
- soit pendant une durée prédéterminée,
- soit jusqu'à ce que le courant résiduel atteigne un seuil.

Il ne s'agit pas d'un appareil de diagnostic car, accessoirement, lorsque le courant résiduel n'est pas atteint, la batterie est éliminée.

On connaît un système de charge (US-5.576.608) d'accumulateurs secondaires au Lithium-Ion utilisé pour des camescopes, des téléphones mobiles, etc ....

Ce système de charge optimise la charge suivant le principe d'égalisation.

Il ne s'agit pas d'un moyen de diagnostic et le problème de la disponibilité des batteries ne se posent pas car la batterie est déconnectée du camescope pour être placée sur un support de charge.

Un des résultats que l'invention vise à obtenir est un dispositif de contrôle de l'état des accumulateurs d'une batterie qui, notamment, ne pénalise pas la capacité de cette batterie.

A cet effet, l'invention a pour objet un dispositif de contrôle du type précité comprenant un moyen pour relever périodiquement la tension aux bornes de chaque accumulateur et un moyen pour la comparer avec une tension de consigne, de manière à détecter les accumulateurs susceptibles d'être défaillants, dit accumulateurs défaillants, dont la tension serait inférieure à la tension de consigne, ce dispositif étant caractérisé en ce qu'il comprend :
- un moyen pour connecter électriquement l'accumulateur défaillant à un chargeur d'égalisation comprenant un moyen pour charger l'accumulateur, d'une part, à courant constant, jusqu'à ce que sa tension soit égale à la tension d'égalisation et, d'autre part, lorsque cette tension d'égalisation est atteinte, à tension constante égale à la tension d'égalisation précitée pendant un temps déterminé,
- un moyen pour, juste avant la fin de la charge, relever le courant dit résiduel de charge du chargeur et
- un moyen pour comparer la valeur du courant résiduel de charge avec une valeur de référence fonction de la nature de l'accumulateur.

L'invention sera bien comprise à l'aide de la description ci-après faite à titre d'exemple non limitatif, en regard du dessin ci-annexé qui représente schématiquement :

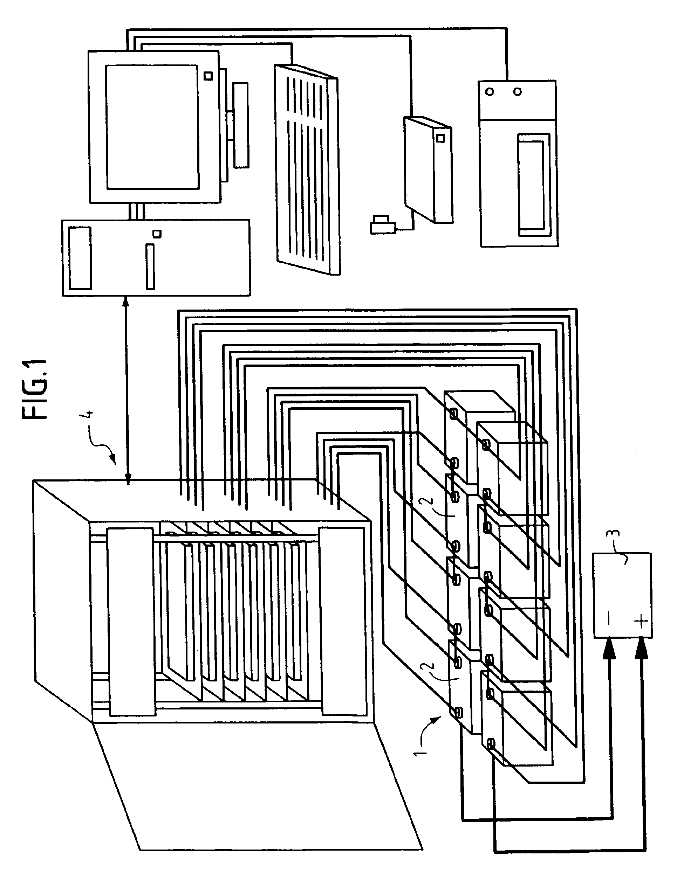

- figure 1 : un dispositif de contrôle,

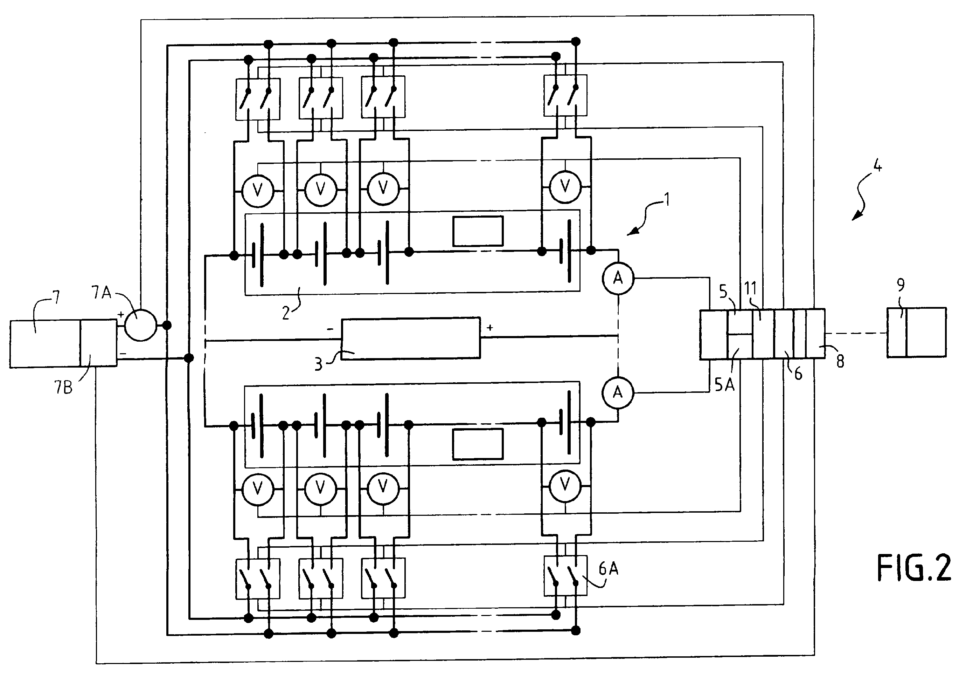

- figure 2 : une synoptique du dispositif de contrôle.

En se reportant au dessin, on voit que pour pallier à l'absence d'alimentation électrique fournie par le secteur, on a prévu une batterie 1 de secours.

Cette batterie 1 de secours est constituée par des accumulateurs 2 reliés électriquement en série et/ou en parallèle.

Un nombre minimal de batteries doit à tout moment être disponible pour répondre à une coupure de courant. Les accumulateurs peuvent donc être sollicités à tout moment.

Un chargeur 3 général permet, périodiquement, de recharger la batterie en lui injectant, par exemple, périodiquement, une quantité d'énergie électrique et/ou de maintenir cette batterie à une tension prédéterminée.

Outre ces moyens, il est prévu un dispositif 4 de contrôle de l'état des accumulateurs 2 de la batterie.

Classiquement, celui-ci comprend un moyen 5 pour relever périodiquement la tension aux bornes de chaque accumulateur 2 et un moyen 5A pour la comparer avec une tension de consigne, de manière à détecter les accumulateurs susceptibles d'être défaillants, dits accumulateurs défaillants dont la tension serait inférieure à la tension de consigne.

Selon une caractéristique, ce dispositif comprend en outre :
- un moyen 6 pour connecter électriquement l'accumulateur défaillant à un chargeur 7 d'égalisation comprenant un moyen 7A pour charger l'accumulateur, d'une part, à courant constant, jusqu'à ce que sa tension soit égale à la tension d'égalisation et, d'autre part, lorsque cette tension d'égalisation est atteinte, à tension constante égale à la tension d'égalisation précitée pendant un temps déterminé,
- un moyen 8 pour, juste avant la fin de la charge, relever le courant dit résiduel de charge du chargeur et
- un moyen 9 pour comparer la valeur du courant résiduel de charge avec une valeur de référence dite valeur seuil fonction de la nature de l'accumulateur.

Si la valeur du courant résiduel est supérieure à une valeur de référence, on décharge l'accumulateur et on recommence.

Si, après plusieurs essais d'égalisation, le courant résiduel mesuré est supérieur à la valeur seuil, cela signifie que l'accumulateur est déficient.

Le courant résiduel est le courant délivré par le chargeur d'égalisation réglé à tension constante à la fin du cycle de charge d'égalisation, lequel courant va décroître automatiquement en fonction de la charge de l'accumulateur.

Si cette valeur de courant résiduel est supérieure à une valeur, on peut supposer que l'accumulateur est déficient.

La tension d'égalisation est la tension maximale acceptable par l'accumulateur.

Au delà de cette tension d'égalisation, il y a risque de dégazage de l'électrolyte.

Cette tension d'égalisation dépend donc de la nature des accumulateurs.

La valeur du courant de charge appliquée à courant constant sera de préférence compris entre 1/30 et 1/70 de la capacité nominale de l'accumulateur .

Au moins indirectement, le chargeur d'égalisation comprend un moyen 7A pour régler le courant constant de charge dans la plage de valeurs précitées ainsi qu'un moyen 7B de réglage de la tension d'égalisation.

Compte tenu des courants relativement importants, la mesure du courant peut être réalisée avec des sondes à effet Hall.

Le dispositif comprend donc des moyens 6 pour connecter électriquement chaque accumulateur au chargeur d'égalisation sans toutefois le déconnecter de l'ensemble des accumulateurs.

On peut utiliser différents moyens 6 tels deux interrupteurs 6A de puissance par accumulateurs ou alors un seul interrupteur par accumulateur avec un moyen pour ajuster la polarité.

Cette connection se fait donc automatiquement.

Ainsi, les accumulateurs sont reliés entre eux pour former une batterie et cette batterie comporte en plus, pour chaque accumulateur, un jeu d'interrupteurs de puissance pour le relier au chargeur d'égalisation.

Des moyens permettent de surveiller la tension de chaque accumulateur.

En outre, le dispositif comprend un système 11 de contrôle de la position ouverte ou fermée des interrupteurs 6A.

Avantageusement, le réglage de la tension d'égalisation tient compte des résistances des câbles électriques.

Un système de télétransmission permet de gérer à distance ces différentes opérations et de transmettre à une centrale l'état des accumulateurs.

La durée de la charge avec le chargeur d'égalisation sera déterminée en fonction du courant de charge constant choisi et de la capacité de l'accumulateur.

Le courant de charge sera largement inférieur au courant de charge habituellement utilisé qui est de l'ordre de C/10.

Le dispositif permet de poursuivre la scrutation des tensions aux bornes de l'accumulateur pendant la charge du chargeur d'égalisation.

Le système sera piloté par un logiciel et une interface.

## Revendications

1. Dispositif de contrôle de l'état des accumulateurs d'une batterie comprenant un moyen (5) pour relever périodiquement la tension aux bornes de chaque accumulateur (2) et un moyen (5A) pour la comparer avec une tension de consigne, de manière à détecter les accumulateurs susceptibles d'être défaillants, dits accumulateurs défaillants dont la tension serait inférieure à la tension de consigne,
ce dispositif est **CARACTERISE** en ce qu'il comprend :
- un moyen (6) pour connecter électriquement l'accumulateur défaillant à un chargeur (7) d'égalisation comprenant un moyen (7A) pour charger l'accumulateur, d'une part, à courant constant, jusqu'à ce que sa tension soit égale à la tension d'égalisation et, d'autre part, lorsque cette tension d'égalisation est atteinte, à tension constante égale à la tension d'égalisation précitée pendant un temps déterminé,
- un moyen (8) pour, juste avant la fin de la charge, relever le courant dit résiduel de charge du chargeur et
- un moyen (9) pour comparer la valeur du courant résiduel de charge avec une valeur de référence dite valeur seuil fonction de la nature de l'accumulateur.

2. Dispositif selon la revendication 1 **caractérisé** en ce que la valeur du courant de charge appliquée à courant constant sera de préférence compris entre 1/30 et 1/70 de la capacité nominale de l'accumulateur .

3. Dispositif selon la revendication 2 **caractérisé** en ce que le chargeur d'égalisation comprend un moyen (7A) pour régler le courant constant de charge dans la plage de valeurs précitées ainsi qu'un moyen (7B) de réglage de la tension d'égalisation.

4. Dispositif selon la revendication 1 **caractérisé** en ce qu'il comprend deux interrupteurs (6A) de puissance par accumulateurs.

5. Dispositif selon la revendication 4 **caractérisé** en ce qu'il comprend un système (11) de contrôle de la position ouverte ou fermée des interrupteurs (6A).
